(19) Europäisches Patentamt

European Patent Office

Office européen des brevets

(11) **EP 1 684 278 A1**

(12) **EUROPEAN PATENT APPLICATION**

(43) Date of publication:
26.07.2006 Bulletin 2006/30

(51) Int Cl.:
*G11B 7/135* (2006.01)       *G02B 5/18* (2006.01)
*G11B 7/125* (2006.01)

(21) Application number: 06250037.6

(22) Date of filing: 05.01.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.01.2005 KR 2005005473**

(71) Applicant: **Samsung Electronics Co., Ltd.**
**Suwon-si, Gyeonggi-Do (KR)**

(72) Inventors:
• **Kim, Bong-gi**
**Yeongtong-gu, Suwon-si, Gyeonggi-do (KR)**
• **Park, Soo-han**
**Pungdeokcheon-dong,Yongin-si,Gyeonggi-do (KR)**
• **Park, Seong-su**
**1-dong, Jangan-gu, Suwon-si, Gyeonggi-do (KR)**

(74) Representative: **Brandon, Paul Laurence et al**
**APPLEYARD LEES**
**15 Clare Road**
**Halifax HX1 2HY (GB)**

(54) **Diffraction element and optical pick-up apparatus having the same**

(57)     A diffraction element (160) for an optical pick-up apparatus is capable of being used with discs that have different track pitches. The diffraction element includes a first region (162) and a second region (164), each being constituted by a diffracting grating with a predetermined period. The first region and the second region have a predetermined height difference $\Delta x$.

# FIG. 2

EP 1 684 278 A1

**Description**

The present invention generally relates to diffraction gratings and to optical pick-up apparatuses.

Optical pick-up apparatuses have been adopted in compact disk (CD) players, digital versatile disk (DVD) players, CD-read only memory (CD-ROM) drives, and the like, to perform reading and writing operations of information on an optical recording medium without contacting the medium. To write the information, the optical pick-up irradiates a laser beam onto the surface of disk to form pits, while to read information, it optically reads the pit information on the disk and outputs it as electrical signals. To perform these operations, the optical pick-up apparatus includes optical elements such as a laser diode which acts as a light source to irradiate a laser beam, a diffraction element, a beam splitter for controlling a deviation of the laser beam, a plurality of lenses for forming an optical path, an optical detector for signal detection, and the like.

Such an optical pick-up apparatus performs focus control for focusing the spot of a beam on the disk surface by moving an objective lens in the vertical direction, and performs tracking control which controls the tracking of the beam on a track on the optical medium by horizontally moving an objective lens. To perform the focus control and the tracking control, it is necessary to generate a focus error signal (which will be referred to as a "FE signal") and a tracking error signal (which will be referred to as a "TE signal"). To generate the FE signal, an astigmatism method is typically used, and to generate the TE signal, there are various methods such as a push pull (PP) method and a differential push pull (DPP) method. The PP method detects whether or not the beam spot is positioned at the center of track by using one beam which is reflected from the optical medium, and measuring the reflected beam intensity in each region of an optical detecting element that is divided into two regions. In the PP method, however, an undesirable DC offset phenomenon occurs in the TE signal because of an object lens shift to perform a tracking servo.

For this reason, the DPP method that utilizes 3 beams for tracking control is also used. In the DPP method, a main beam is irradiated at the center of the track, and two sub beams are irradiated at the periphery of the groove. The two sub beams are disposed a predetermined distance away from the main beam in a radial direction and a tangential direction of disk, respectively. The DPP method utilizes the difference among the 3 beams to compensate for the DC offset in the TE signal. When the DPP method is used with disks that have different track pitches due to different specifications, the sub beam spots cannot be formed at the groove. That is, the DPP method cannot be used with disks that meet varying specifications.

Thus, in recent years, a DPP method which irradiates 3 beams onto one track so that disks with different track pitches can be used has been developed. If the DPP method which irradiates 3 beams on one track is used, however, it is necessary to generate a phase difference of 180 degrees in the sub beams before a laser beam is irradiated on the disk due to the difference in height between a land and groove.

Accordingly, there is a continuing need for an improved diffraction element for an optical pick-up apparatus, and an optical pick-up apparatus using the same.

An aim of preferred embodiments of the present invention is to solve at least the above problems and/or disadvantages and to provide at least the advantages described below. Accordingly, an aim of preferred embodiment of the present invention is to provide a diffraction element which can be used for disks with track pitches different from each other and an optical pick-up apparatus using the same.

In accordance with an aspect of the present invention, a diffraction element for an optical pick-up apparatus includes a first region made of a diffraction grating with a predetermined period; and a second region made of a diffraction grating with a predetermined period, wherein the first region and a second region are offset by a predetermined height difference $\Delta x$.

In accordance with another aspect of the present invention, an optical pick-up apparatus comprises a light source for emitting a beam; a diffraction element composed of a first region and a second region which are made of diffraction gratings with predetermined periods, respectively, and are offset by a predetermined height difference $\Delta x$ between the first and second regions, for diffracting the light; an optical system which forms a path for the light diffracted by the diffraction element and guides light reflected from an optical recording medium, and an optical detector for receiving the light reflected from the optical recording medium to detect information signals and error signals.

In one exemplary embodiment, the diffraction gratings in the first and the second regions are coincident with each other and a dividing line between the first region and the second region is substantially parallel to a tangential direction of the optical recording medium.

In another exemplary embodiment, the predetermined height difference $\Delta x$ is set such that beams SB1a and SB2a of $\pm$ 1st order diffraction beam SB1 that pass through the first region and beams SB2a and SB2b of $\pm$ 1st order diffraction beam SB2 that pass through the second region have a phase difference of 180 degrees.

In yet another exemplary embodiment, the light source includes a first light source for a DVD and a second light source for a CD, and the diffraction grating includes first and second diffraction gratings for diffracting the light emitted from the first and the second light sources, respectively.

In a further exemplary embodiment, the optical system includes a first beam splitter for changing the path of light emitted from the first light source, and passing the light emitted from the second light source, a second beam splitter for changing the path of light emitted from the first beam splitter, and guiding the light reflected from the optical recording medium to the optical detector, a collimating lens for changing the light emitted from the second beam splitter into a substantially parallel beam, and an objective lens for focusing the light emitted from the collimating lens to the optical recording medium.

Further features of the present invention are set out in the appended claims.

The present invention will be more apparent from the following description by way of example only, taken in conjunction with the accompanying drawings, in which:

FIG. 1 is a diagram for schematically explaining the principle of an optical pick-up apparatus according to one exemplary embodiment of the present invention;

FIG. 2 is a schematic perspective view of the diffraction element shown in FIG. 1.

FIG. 3 is a front view of the diffraction element shown in FIG. 2;

FIG. 4 is a cross sectional view taken along line IV-IV of FIG. 2;

FIG. 5 is a schematic plan view for illustrating a state that 3 beams divided by the diffraction element are irradiated on the disk;

FIG. 6 is a schematic diagram of the optical detecting element shown in FIG. 1; and

FIG. 7 is a graph for schematically showing the TE signal generated according to one exemplary embodiment of the present invention.

Throughout the drawings, the same drawing reference numerals will be understood to refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

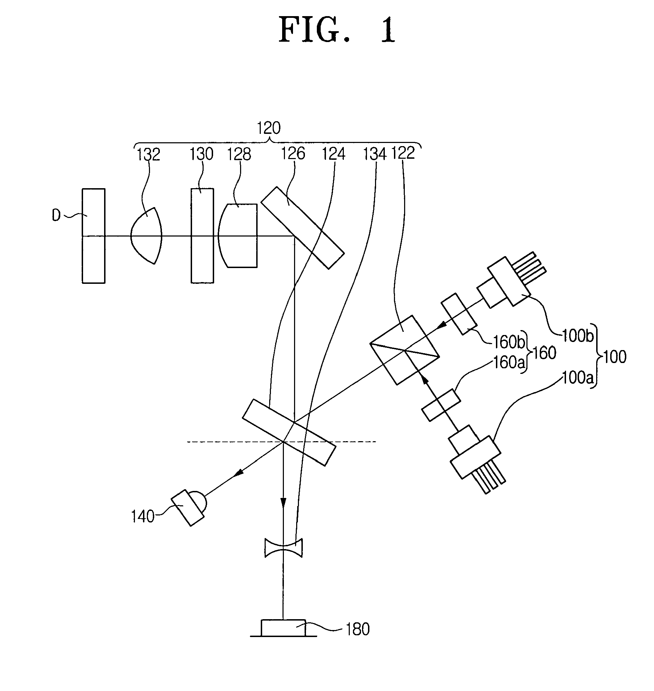

Referring to FIG. 1, an optical pick-up apparatus according to one exemplary embodiment of the present invention includes a light source 100, an optical system 120, a front photo diode (FPD) 140, a diffraction element 160, and a photo diode integrated circuit (PDIC) 180 acting as an optical detector.

The light source 100 includes a first light source 100a for a DVD and a second light source 100b for a CD. The light sources 100a and 100b are preferably laser diodes (LDs) that generate a beam having a single wavelength. Even more preferably, the first light source 100a emits light having a wavelength of 650 nm, and the second light source 100b emits light having a wavelength of 780 nm. In the illustrated embodiment, the light source 100 includes light sources for use with DVDs and CDs. However, the light source may also include a light source for a blue-ray disk (BD) and a high definition (HD)-DVD that emits light having a wavelength of 405 nm.

The optical system 120 includes a first beam splitter 122, a second beam splitter 124, a reflecting mirror 126, a collimating lens 128, a quarter-wave plate 130, an objective lens 132, and a sensor lens 134.

Preferably, the first beam splitter 122 is a cubic beam splitter. The first beam splitter 122 changes the optical path by reflecting light emitted from the first light source 100a, but allowing light emitted from the second light source 100b to pass through. Such selective transmission of light depends on the wavelength difference between lights emitted by the first and second light sources 100a and 100b or the polarization state of emitted light. Since such technology is known to those skilled in the art, a detailed description will be omitted for brevity.

The second beam splitter 124 allows a portion of the light emitted from the first beam splitter 122 to be transmitted to the FPD 140. The remaining portion is reflected to the reflecting mirror 126.

The reflecting mirror 126 changes the path of the light reflected from the second beam splitter 124 so that the reflected light is incident on the objective lens 132.

The collimating lens 128 collimates the light reflected from the reflecting mirror 126 into a substantially parallel beam.

The quarter wave plate 130 changes linearly polarized light passing through the collimating lens 128 to circular polarized light, and changes circular polarized light reflected from the disk D to linearly polarized light. Since the functions and operation of such a quarter wave plate 130 are known to those skilled in the art, a detailed explanation is omitted for brevity.

The light emitted from the quarter wave plate 130 is focused on the disk D by the objective lens 132.

The sensor lens 134 can be a concave lens, in which the spot of light reflected from the disk D is enlarged, thereby making it possible to form a larger, more effective spot for use by the PIDC 180. Also, to obtain the FE signal, the sensor lens 134 may generate an astigmatism in the light which is reflected from the disk D.

The FPD 140 receives a portion of the light emitted from the first and the second light sources 100a and 100b to measure their intensity. The measured intensity is transferred to a control unit (not shown) and controls a voltage applied to the first and the second light sources 100a and 100b, so that the intensity of emitted light can be maintained at a substantially constant intensity.

The diffraction element 160 includes a first diffraction element 160a for diffracting beams emitted from the first light sources 100a and a second diffraction element 160b for diffracting beams emitted from the second light sources 100b. Since the function and structure of the first diffraction element 160a and the second diffraction element 160b are substantially identical with each other, only one diffraction element 160 is described in detail.

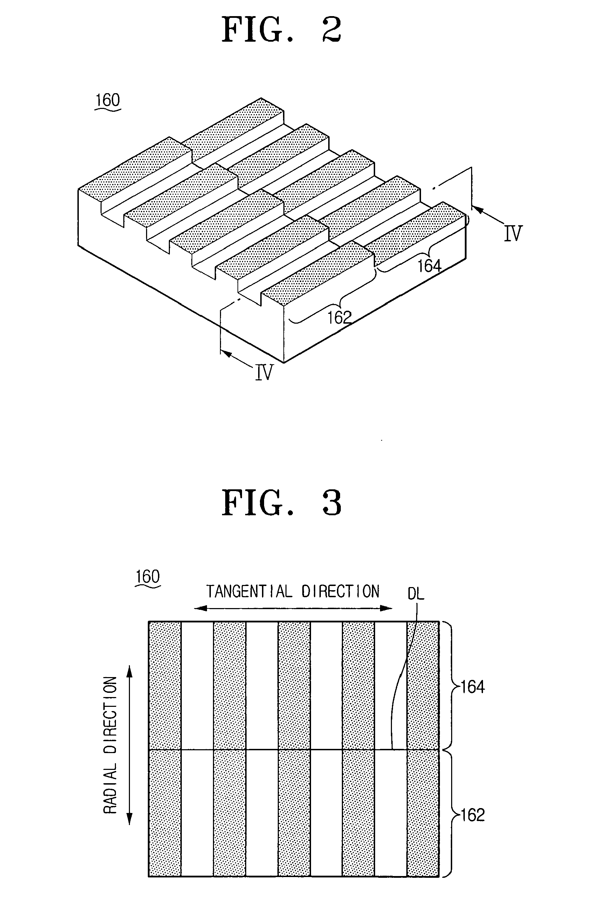

Referring to FIGS. 2 to 5, the light emitted from the light source 100 is diffracted by the diffraction element 160 to form a main beam as the 0th order diffraction beam and sub beams as the $\pm$ 1 st order diffraction beam.

Namely, the light emitted from the light source 100 is divided into 3 beams MB, SB1 and SB2 by the diffraction element 160. The diffraction element 160 is divided into a first region 162 and a second region 164, in which a dividing line DL between the first region 162 and the second region 164 is substantially parallel to a tangential direction of disk D. Also, the diffraction grating of the first region 162 and the second region 164 is formed substantially parallel to a radial direction of disk D, so that the 3 beams MB, SB1 and SB2 can be irradiated substantially parallel to each other on one track of the disk D.

Meanwhile, the diffraction gratings of the first region 162 and the second region 164 are coincident with each other (that is, they are not offset with respect to each other). If the first region 162 and the second region 164 have the same height H, and are not offset by one another, the diffraction gratings do not generate any phase difference in the sub beams, which are the $\pm$1st order diffraction beams being diffracted by the diffraction element 160. However, as described above, the 3 beams MB, SB1 and SB2 are irradiated on one track of disk D as the optical recording medium, thus, a phase difference of 180 degrees should be generated in the sub-beams SB 1 and SB2.

A structure for a diffraction grating 160 that generates such a phase difference will now be described. To form the phase difference of the sub-beams SB 1 and SB2, it is preferable that the first region 162 and the second region 164 of the diffraction gratings 160 are formed to be offset from one another by a prescribed height difference $\Delta x$. In the exemplary embodiment, the height of second region 164 is the same as that of the first region 162, but the second region 164 is vertically offset from the first region 162. Because of the vertical offset difference $\Delta x$, the phase difference can be generated as the following equation 1.

$$(\text{Equation 1})$$

$$E1 = EO\ e\ i(kx-\omega t)$$

$$E2 = EO\ e\ i(k(x+\Delta x)-\omega t) = EO\ e\ i(kx-\omega t)\ e\ ik\Delta x$$

Equation 1 is a function representing the path of light when the light emitted from the light source 100 shown in FIG. 1 passes through the diffraction element 160, in which E1 is a path function of light passing through the first region 162, E2 is a path function of light passing through the second region 164, E0 indicates an amplitude of light, k is a constant having a relationship such as k = $2\pi/\lambda$, $\lambda$ indicates the wavelength of light, $\omega$ indicates the frequency of light, and t indicates a time, respectively.

As expressed in Equation 1, in each of the beams SB 1a and SB2a passing through the first region 162 and beams SB1b and SB2b passing through the second region 164, respectively, a phase difference of k$\Delta x$ is generated. A phase difference of 180 degrees (that is, $2\pi$) is preferably used so that the conventional DPP method can be employed. However, when other methods of calculating the TE signal are used, the phase difference may not need to be 180 degrees. In that case, the phase difference generated by the height difference $\Delta x$ can be changed depending on the index of refraction of the diffraction element 160. Thus, if the index of refraction of the diffraction element 160 is known, it is possible to calculate the offset height difference $\Delta x$ required to produce a desired phase difference.

Since the phase difference can be changed depending on the wavelength of light, when light having a different wavelength is used, it is necessary to change the value of $\Delta x$. For this reason, in the first diffraction element 160a for diffracting the light emitted from the first light source 100a, considering the wavelength of light emitted from the first light source 100a, the $\Delta x$ should be formed to have a prescribed offset height difference $\Delta x$.

In the second diffraction element 160b for diffracting the light emitted from the second light source 100b, considering the wavelength of light emitted from the second light source 100b, the $\Delta x$ should be formed to have a prescribed offset height difference Δx, for the same reason as the above.

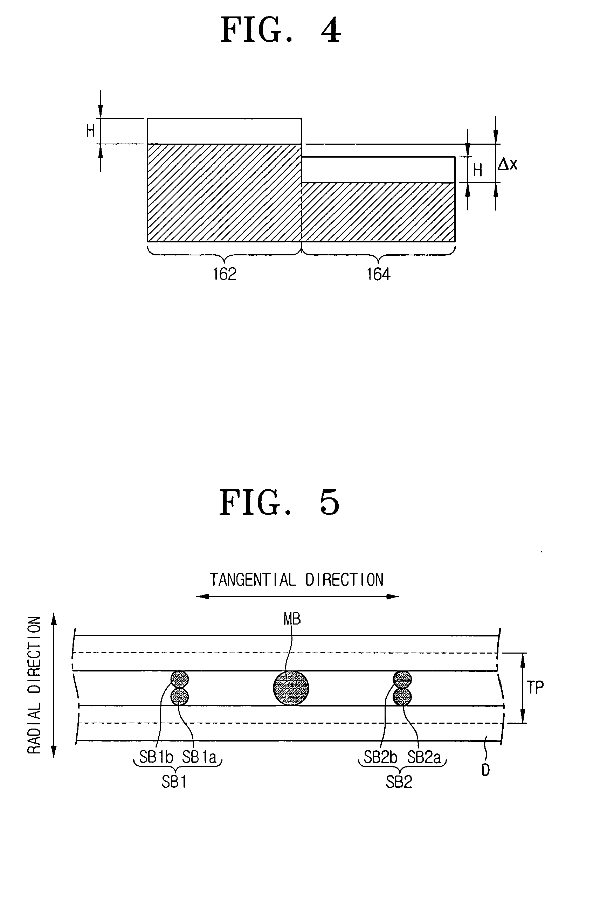

The 3 beams divided by the diffraction element 160b are to be irradiated on a track of disk D as shown in FIG. 5, by way of a first beam splitter 122, a second beam splitter 124, a reflecting mirror 126, a collimating lens 128, quarter wave plate 130, and an objective lens 132 (FIG. 1), in which the beam emitted on the center indicates a main beam MB, and beams at the left and right sides of the main beam MB represent sub beams SB 1 and SB2 which are ±1st diffraction beams, respectively. Sub beams SB1 and SB2 are further divided into beams SB1a and SB2a passing through the first region 162 and beams SB1b and SB2b passing through the second region 164, by the diffraction element 160. Also, the beam reflected from the disk D is received by the PIDC 180, by way of the objective lens 132, the quarter wave plate 130, the collimating lens 128, the reflecting mirror 126, the second beam splitter 124, and the sensor lens 134 (FIG. 1).

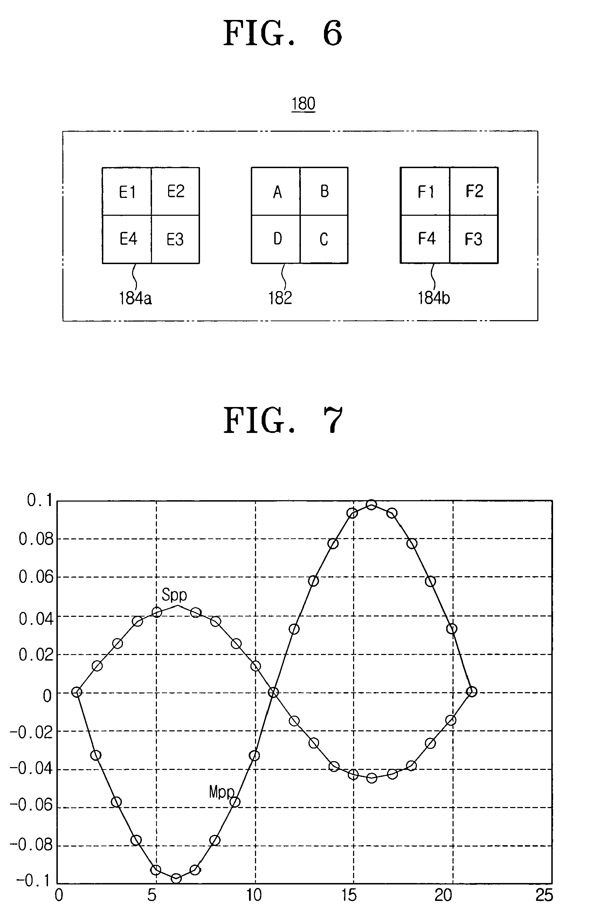

The PIDC 180 will now be described. The PIDC 180 converts the light reflected from disk D into an electrical signal, and detects an information signal (such as a radio frequency (RF)) signal, a FE signal, and a TE signal. The PIDC 180 includes 3 light detecting elements 182, 184a and 184b as shown in FIG. 6. The light detecting element 182 provided at a central portion of the PIDC 180 functions as a light detecting element for a main beam and is divided into four regions A, B, C and D. The light detecting elements 184a and 184b provided at both sides of the light detecting element 182 function as light detecting element for the sub beams and are divided into regions E1, E2, E3, E4, and regions F1, F2, F3, F4, respectively. The main beam and sub beams are irradiated onto the divided regions, and the electrical signals generated by the irradiated light are output independently. Such electrical signals can be utilized for calculating the information signal, the FE signal, and the TE signal. The FE signal can be obtained by the astigmatism method, and the TE signal can be obtained by the DPP method.

A method for calculating the information signal, FE signal, and TE signal will now be described. Assuming that the electrical signals output from the divided regions A,B,C,D; E1,E2,E3,E4; and F1,F2,F3,F4, are a,b,c,d; e1,e2,e3,e4; and fl,f2,f3,f4, respectively, the information signal (RF) can be calculated by the following Equation 2, the FE signal can be calculated by the following Equation 3, and the TE signal can be calculated by the following Equation 4, respectively:.

(Equation 2)

$$RF = a+b+c+d$$

(Equation 3)

$$FE = [(a+c)-(b+d)]+k[(e1+e3)-(e2+e4) + (f1+f3)-(f2+f4)]$$

$$k = (a+b+c+d)/(e1+e2+e3+e4+f1+f2+f3+f4)$$

(Equation 4)

$$MPP = (a+d)-(b+c)$$

$$SPP = (e1+e4)-(e2+e3) + (f1+f4)-(f2+f3)$$

$$TE(DPP) = MPP - kSPP$$

$$k = (a+b+c+d)/(e1+e2+e3+e4+f1+f2+f3+f4)$$

The value k is a gain for compensating for the different intensity of light of the diffracted tlst order sub beams from the ±0th order main beam.

A signal waveform of the MPP (main beam push pull) signal and the SPP (sub-beam push pull) signal which are generated by Equation 4 are illustrated in FIG. 7. Here, the horizontal axis is an emission position of light in a radial light beam on disk D, and the vertical axis is the calculated value of the electrical signal depending on the emission of the light. As shown in FIG. 7, the MPP signal has a phase difference of 180 degrees to an SPP signal. Thus, according to this embodiment of the present invention, the MPP signal and the SPP signal have a phase difference of 180 degrees, and it is possible to control the tracking by a conventional DPP method.

As described above, according to embodiments of the present invention, by offsetting each region of diffraction elements divided into two regions and generating a phase difference in a sub-beam which is ±1st order diffraction beam of the light emitted from the light source, a TE signal can be obtained by a method that emits three beams on one track of disk.

Moreover, according to embodiments of the present invention, by emitting three beams on one track of a disk to calculate a TE signal, it is possible to prevent the existing DC offset as well as to enhance tracking control precision of a compatible optical pick-up device to write or read information on disks having different track pitches.

While the invention has been shown and described with reference to certain exemplary embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A diffraction element (160) for an optical pick-up apparatus, comprising:

a first region (162) made of a diffraction grating with a predetermined period; and
a second region (164) made of a diffraction grating with a predetermined period,

wherein the first region and a second region are offset by a predetermined height difference Δx.

2. The diffraction element (160) according to claim 1, wherein
the diffraction gratings of the first and second regions (162, 164) are coincident with each other.

3. The diffraction element (160) according to claim 1 or claim 2, wherein
a dividing line of the first and second regions (162, 164) is substantially parallel with a tangential direction of an optical medium (D).

4. The diffraction element (160) according to any preceding claim, wherein
the height difference Δx is set such that sub beams SB1a and SB2a of a ±1st order diffraction beam SB1 passing through the first region (162) and sub beams SB2a and SB2b of a ±1st order diffraction beam SB2 passing through the second region (164) have a phase difference of 180 degrees.

5. An optical pick-up apparatus, comprising:

a light source (100) for emitting a light beam;
a diffraction element (160) composed of a first region (162) and a second region (164) which are made of diffraction gratings with predetermined periods, respectively, and are offset by a predetermined height difference Δx between the first and second regions, for diffracting the light;
an optical system (120) which forms a path for the light diffracted by the diffraction element and guides light reflected from an optical recording medium (D); and
an optical detector (180) for receiving the light reflected from the optical recording medium to detect information signals and error signals.

6. The optical pick-up apparatus according to claim 5, wherein
the diffraction gratings of the first and second regions (162, 164) are coincident with each other.

7. The optical pick-up apparatus according to claim 5 or claim 6, wherein
a dividing line of the first and second regions (162, 164) is substantially parallel to the tangential direction of the optical recording medium.

8. The optical pick-up apparatus according to any one of claims 5-7, wherein
the height difference Δx is set such that sub beams SB1a and SB2a of a ± 1st order diffraction beam SB1 passing through the first region (162) and sub beams SB2a and SB2b of a ± 1st order diffraction beam SB2 passing through the second region (164) have a phase difference of 180 degrees.

9. The optical pick-up apparatus according to any one of claims 5-8, wherein
the light source (100) includes a first light source (100a) for a DVD and a second light source (100b) for a CD.

10. The optical pick-up apparatus according to claim 9, wherein
the diffraction element (160) includes a first diffraction element and a second diffraction element for diffracting the light beams emitted from the first and second light sources (100a, 100b), respectively.

11. The optical pick-up apparatus according to claim 10, wherein
the height difference Δx of the first diffraction element is set such that sub beams SB1a and SB2a of a ±1st order diffraction beam SB 1 passing through the first region (162) and sub beams SB2a and SB2b of a ±1st order diffraction beam SB2 passing through the second region (164) have a phase difference of 180 degrees.

12. The optical pick-up apparatus according to claim 11, wherein
the height difference Δx of the second diffraction element is set such that sub beams SB1a and SB2a of a ± 1st order diffraction beam SB1 passing through the first region (162) and sub beams SB2a and SB2b of a ±1st order diffraction beam SB2 passing through the second region (164) have a phase difference of 180 degrees.

13. The optical pick-up apparatus according to claim 12, wherein the optical system includes:

a first beam splitter (122) for changing an optical path of light emitted from the first light source (100a) and allowing light emitted from the second light source (100b) to pass through it;

a second beam splitter (124) for changing an optical path of light emitted from the first beam splitter (122) and guiding light reflected from the optical recording medium (D) to the optical detector (180);

a collimating lens (128) for changing light emitted from the second beam splitter into a substantially parallel light beam; and

an optical objective lens (132) for focusing the substantially parallel light beam emitted from the collimating lens onto the optical recording medium.

# FIG. 1

# FIG. 2

# FIG. 3

# FIG. 4

162    164

# FIG. 5

TANGENTIAL DIRECTION

RADIAL DIRECTION

MB

TP

SB1b  SB1a          SB2b  SB2a

SB1                 SB2          D

# FIG. 6

<u>180</u>

| E1 | E2 |
|----|----|
| E4 | E3 |

184a

| A | B |
|---|---|
| D | C |

182

| F1 | F2 |
|----|----|
| F4 | F3 |

184b

# FIG. 7

**European Patent Office**

**EUROPEAN SEARCH REPORT**

Application Number

EP 06 25 0037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 828 492 A (MOSER ET AL) 27 October 1998 (1998-10-27) | 1-4 | G11B7/135 G02B5/18 |
| Y | * column 2, line 40 - column 4, line 23 * * figures 1-4 * | 5-13 | G11B7/125 |
| Y | US 2004/246874 A1 (TAKAGI TERUKAZU ET AL) 9 December 2004 (2004-12-09) * paragraph [0152] - paragraph [0175] * * figures 12,13 * | 5-13 | |
| X | EP 0 831 470 A (DEUTSCHE THOMSON-BRANDT GMBH) 25 March 1998 (1998-03-25) * figures 1-5 * * page 5, line 18 - page 6, line 55 * | 1-12 | |
| X | US 5 475 670 A (HAMADA ET AL) 12 December 1995 (1995-12-12) * figures 1-4 * * column 3, line 66 - column 4, line 60 * | 1,5 | |

TECHNICAL FIELDS SEARCHED (IPC)

G11B
G02B

The present search report has been drawn up for all claims

| Place of search | Date of completion of the search | Examiner |
|---|---|---|
| Munich | 16 March 2006 | Schenke, C |

EPO FORM 1503 03.82 (P04C01)

**EP 1 684 278 A1**

## ANNEX TO THE EUROPEAN SEARCH REPORT
## ON EUROPEAN PATENT APPLICATION NO.

EP 06 25 0037

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2006

| Patent document cited in search report | | | Publication date | Patent family member(s) | | Publication date |
|---|---|---|---|---|---|---|
| US 5828492 | A | | 27-10-1998 | DE | 4421392 A1 | 21-12-1995 |
| | | | | WO | 9535516 A1 | 28-12-1995 |
| | | | | EP | 0765488 A1 | 02-04-1997 |
| | | | | JP | 9507922 T | 12-08-1997 |
| US 2004246874 | A1 | | 09-12-2004 | CN | 1551158 A | 01-12-2004 |
| | | | | JP | 2004355790 A | 16-12-2004 |
| EP 0831470 | A | | 25-03-1998 | CN | 1177799 A | 01-04-1998 |
| | | | | DE | 19638878 A1 | 26-03-1998 |
| | | | | JP | 10105996 A | 24-04-1998 |
| | | | | US | 5953304 A | 14-09-1999 |
| US 5475670 | A | | 12-12-1995 | NONE | | |

For more details about this annex : see Official Journal of the European Patent Office, No. 12/82